# EUROPÄISCHE PATENTSCHRIFT

(11) **EP 1 034 878 B1**
(45) Veröffentlichungstag und Bekanntmachung des Hinweises auf die Patenterteilung: **07.07.2004**
(21) Anmeldenummer: 99126265.0
(22) Anmeldetag: 31.12.1999
(51) Int. Cl.: B23Q 7/12, B23Q 7/00, B65G 47/14

(54) **Vorrichtung und Verfahren zum Vereinzeln von stabförmigen Werkstücken**
Device and method for separating out rod-shaped workpieces
Dispositif et procédé pour séparer des pièces en forme de barres

(30) Priorität: 12.03.1999 DE 19910936
(43) Veröffentlichungstag der Anmeldung: 13.09.2000
(73) Patentinhaber: RSA Entgrat- u. Trenn-Systeme GmbH & Co., 58513 Lüdenscheid (DE)
(72) Erfinder: Dünwald, Karl-Heinz, Dipl.-Ing., 51069 Köln (DE); Schmidt, Rainer, 58750 Altena (DE)
(74) Vertreter: Patentanwälte Ostriga & Sonnet

(56) Entgegenhaltungen:
- EP-A- 0 790 086
- DE-A- 3 906 084

## Beschreibung

Die Erfindung betrifft zunächst eine Vorrichtung zum Vereinzeln von stabförmigen Werkstücken, insbesondere lange und dünne Vollprofile und Hohlprofile, die bündelweise über- und untereinander auf einer Transportebene lagern, wobei oberhalb der Transportebene mindestens eine in die Werkstück-Anordnung Kräfte einleitende Einrichtung angeordnet ist, mit der eine im wesentlichen parallele einlagige Anordnung der Werkstücke herbeigeführt wird.

Ein derartiger Stand der Technik ist beispielsweise in Form eines sogenannten "Trampelbalkens" aus dem druckschriftlich nicht belegbaren Stand der Technik bekannt. Hierbei handelt es sich eine Vielzahl von quer zur Längserstreckung der Werkstücke angeordneter jeweils separat angetriebener leistenartiger Elemente, die "trampelnde" Bewegungen auf das Werkstückbündel ausüben. Dabei müssen die Bewegungen der einzelnen "Trampelbalken" aufeinander abgestimmt verlaufen, damit tatsächlich eine Vereinzelung der Werkstücke erfolgt. Diese an sich vorteilhafte Vorrichtung ist jedoch sehr aufwendig in ihrer Herstellung und Steuerung. Auch müssen die "Trampelbalken" je nach den Abmessungen der zu vereinzelnden Werkstücke jeweils auf eine bestimmte Höhe über der Transportebene justiert werden.

Darüber hinaus ist aus dem ebenfalls nicht druckschriftlich belegbaren Stand der Technik eine in Längserstreckung der Werkstücke oberhalb der Transportebene quer zur Transportrichtung angeordnete Bürstenwalze bekannt, die gegenläufig zur Transportrichtung angetrieben wird, wobei durch die Bürstenwalze eine einlagige Anordnung der Werkstücke erreicht werden soll.

Auf ähnliche Weise ist darüber hinaus eine sogenannte "Ratterwalze" oberhalb der Transportebene angeordnet, bei der auf der Welle jedoch Radelemente mit quer zur Transportrichtung verlaufenden Kerben vorhanden sind, die bei gegenläufigem Betrieb ebenfalls die Einlagigkeit insbesondere von schweren Vollprofilen erreichen sollen.

Ausgehend von dem erstgenannten Stand der Technik besteht daher die Aufgabe der Erfindung darin, eine neue Vorrichtung zum Vereinzeln von stabförmigen Werkstücken, insbesondere langen und dünnen Vollprofilen und Hohlprofilen zu schaffen, die einfach und kostengünstig herzustellen, betriebssicher und bedienungsfreundlich ist.

Die Lösung dieser Aufgabe ergibt sich aus den Merkmalen des Anspruchs 1, insbesondere dem Merkmal des Kennzeichenteils, wonach die Einrichtung bei ständiger Anlage an die Werkstück-Anordnung im wesentlichen in Längserstreckung der Werkstücke verfahrbar ist.

Durch eine kontinuierliche Krafteinwirkung auf eine Werkstück-Anordnung, beispielsweise auf ein Bündel in sich verdrehter Rohre (Spaghetti-Rohre) kann von einem Ende der Rohre beginnend ein automatisches, quasi der Krafteinwirkung vorauseilendes Parallelisieren der Werkstücke erreicht werden. Durch die fortschreitende Krafteinwirkung der Einrichtung rollen/gleiten die übereinanderliegende Werkstücke voneinander ab und gleichzeitig lösen sich die Umschlingungen der Werkstücke. Dies bedeutet, daß durch eine einzige durchgehende Bewegung der Kräfte einleitenden Einrichtung über die Werkstück-Anordnung sehr schnell eine vollständige Vereinzelung bzw. eine einlagige im wesentlichen parallelisierte Anordnung der Werkstücke erreicht werden kann. Auch fallen bei der Änderung der Abmessungen der Werkstücke keine Rüstzeiten an, da sich die Kräfte einleitende Einrichtung jeweils automatisch anpaßt.

Bei einer bevorzugten Ausführungsform der Erfindung ist die Einrichtung in Längsrichtung der Werkstücke quer zur Transportrichtung verfahrbar.

Grundsätzlich ist es nach einer weiteren Ausführungsform der Vorrichtung jedoch auch möglich, daß die Einrichtung in Längsrichtung der Werkstücke und in Transportrichtung verfahrbar ist. Eine derartige erfindungsgemäße Vorrichtung wäre beispielsweise bei einer nachgeschalteten Sägeeinrichtung einsetzbar, die die Werkstücke lagenweise zerteilt.

Bei einer weiteren Ausführungsform der Erfindung ist die Einrichtung als quer zur Längserstreckung der Werkstück angeordnet längliches Bauteil ausgebildet, welches über die Werkstück-Anordnung gleitend bewegbar ist.

Bei einer bevorzugten Ausführungsform der Erfindung ist die Einrichtung jedoch als quer zur Längserstreckung der Werkstücke angeordnete Walze ausgebildet, welche über die Werkstück-Anordnung rollend bewegbar ist. Hierbei wird die Walze lediglich an einem Ende der Werkstück-Anordnung auf letztere aufgesetzt, während dann bei der Bewegung quer zur Transportrichtung lediglich die Gewichtskräfte der Walze auf die Werkstücke einwirken.

Bei einer Weiterentwicklung dieser letztgenannten Ausführungsform ist die Walze über einen Walzenarm und über eine Drehgelenk schwenkbar an einen Wagen befestigt, der an einer quer zur Transportrichtung verlaufenden Linearführung bewegbar angeordnet ist. Diese grundsätzlich sehr einfach aufgebaute Vorrichtung kann in weiterer Abwandlung so ausgebildet sein, daß der Walzenarm einen über das Drehgelenk hinaus geradlinig vorragenden Betätigungsarm aufweist, der an seinem freien Endbereich eine Kurvenrolle trägt, wobei die Linearführung zwei Endbereiche mit jeweils einem eine Hebekurve aufweisenden Bauteil aufweist und wobei durch die bei Annäherung an einen der Endbereiche in den Einwirkungsbereich einer der Hebekurven gelangte Kurvenrolle die Walze in eine von der Transportebene beabstandete Ruheposition bewegbar ist.

Bei dieser besonders bevorzugten Ausführungsform der Erfindung ist die Bewegungssteuerung des Walzenarmes und damit der Walze sehr einfach und funktionssicher ausgebildet.

Weitere Vorteile der Vorrichtung geben sich aus den nachfolgenden Vorrichtungsansprüchen.

Die Erfindung betrifft des weiteren ein Verfahren gemäβ Anspruch 12.

Die Lösung dieser Aufgabe ergibt sich aus den Merkmalen des Anspruches 12, insbesondere den kennzeichnenden Merkmalen, wonach in Längsrichtung der Werkstücke ein in die Werkstück-Anordnung kräfteeinleitende Einrichtung bewegt wird, welche in Anlage an die Werkstück-Anordnung eine einlagige, im wesentlichen parallele Ausrichtung der Werkstück hervorruft.

Dieses erfindungsgemäße Verfahren hat den wesentlichen Vorteil, daß es sehr einfach, schnell und betriebssicher zu einer vollständigen einlagigen Vereinzelung der stabförmigen Werkstücke führt. Weitere Vorteile des Verfahrens ergeben sich aus dem nachfolgenden Verfahrensansprüchen.

Ein beispielhafte Ausführungsform ist in der nachfolgenden Figurenbeschreibung dargestellt und beschrieben. Es zeigen:
Fig. 1 eine Vorrichtung zum Vereinzeln von Werkstücken in einer Startposition,
Fig. 2 eine Vorrichtung gemäß Fig. 1 in einer Betriebsposition,
Fig. 3 eine Vorrichtung gemäß Fig. 1 in einer Endposition,
Fig. 4 eine Seitenansicht einer Vorrichtung zum Vereinzeln von Werkstücken und
Fig. 5 bis 7 schematische Darstellungen der Wirkungsweise einer Walze der Vorrichtung gemäß Fig. 1.

In den Zeichnungen ist eine Vorrichtung zum Vereinzeln von Werkstücken insgesamt mit der Bezugsziffer 10 bezeichnet.

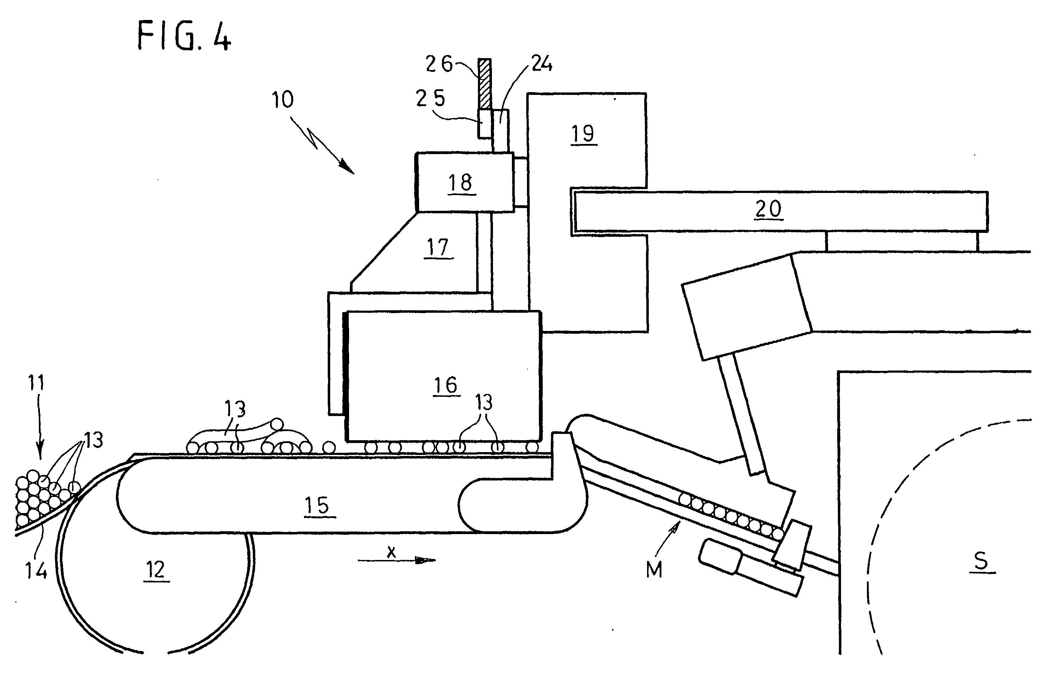

In der Fig. 4 ist die grundsätzliche Anordnung einer Vorrichtung 10 innerhalb einer Transporteinrichtung dargestellt. Man erkennt einen sogenannten Bundlader 11 mit Wickelrolle 12, in dem zahlreiche Profile 13 in einer Bandschlaufe 14 angeordnet sind. Durch Straffung des Bandes 14 können die Profile 13 bzw. ein Profilbündel auf ein Kettenförderer 15 transportiert werden. Es ist in der Fig. 4 angedeutet, daß häufig auf dem Kettenförderer 15 verdrehte Rohrbündel vorhanden sind, in denen Rohrprofile 13 vielfach übereinander und bei längeren dünnen Profilen - wie nicht dargestellt - auch mehrfach umschlungen angeordnet sind. In Transportrichtung x des Kettenförderers 15 vorne ist oberhalb der Bewegungsbahn der Profile 13 eine Vereinzelungswalze 16 angeordnet, die über einen Walzenarm 17 und einem Drehgelenk 18 an einem Wagen 19 quer zur Transportrichtung x entlang einer Linearführung 20 verfahrbar ist. Dem Kettenförderer 15 nachgeordnet ist ein Magazinschacht M und beispielsweise eine Sägevorrichtung S angedeutet.

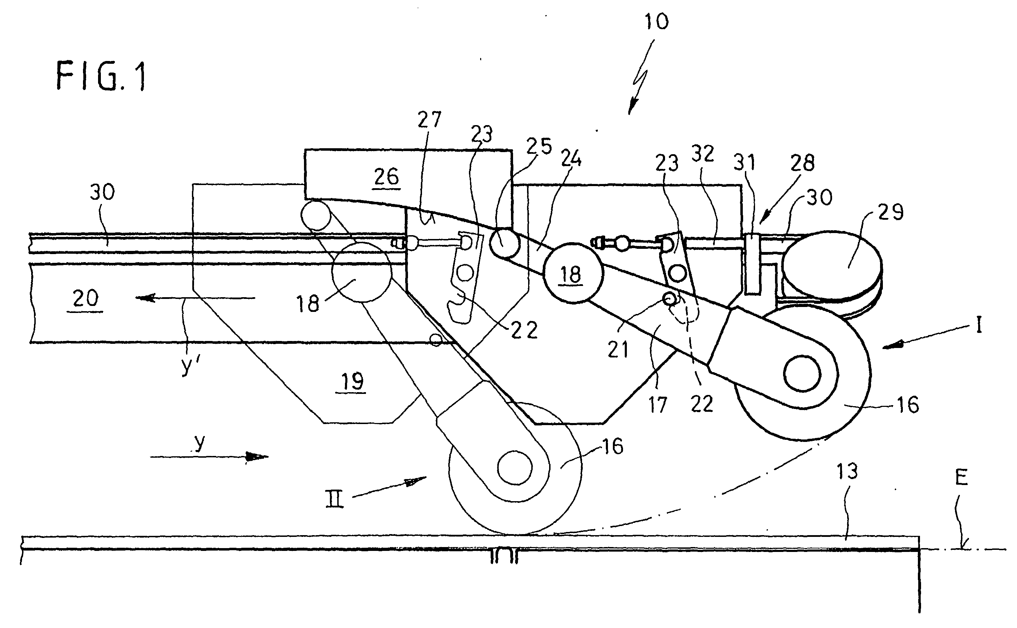

In den Fig. 1 bis 3 ist nun die Vorrichtung 10 im einzelnen dargestellt.

In der Fig. 1 erkennt man die Startposition der Vorrichtung 10. In der Stellung I ist der Walzenarm 17 und damit die Walze 16 von einer Transportebene E sowie einen darauf angeordneten Profil 13 beabstandet, wobei diese Stellung durch das Einrasten eines Verriegelungsbolzens 21 in eine Rastausnehmung 22 einer Verriegelungsklinke 23 gesichert wird. Der Walzenarm 17 trägt an einem Ende die Walze 16 und ist an seinem anderen Ende am Drehgelenk 18 angeordnet. Gegenüberliegend dem Walzenarm 17 ist am Drehgelenk 18 ein Betätigungsarm 24 vorhanden, der an seinem Ende eine Kurvenrolle 25 trägt.

An der bereits vorgenannten Linearführung 20 ist im Bereich der Startposition des Wagens 19 eine Kufe 26 mit einer zur Transportebene gerichteten Hebekurve 27 angeordnet. Des weiteren ist zu erkennen, daß die Linearführung 20 an ihrem stirnseitigen Endbereich 28 ein Umlenkrolle 29 für einen Transportriemen 30 aufweist, der auf nicht dargestellt Weise motorisch angetrieben wird.

Bei Bewegung des Wagens in y-Richtung in Richtung zur Startposition fährt die Verriegelungsklinke 23 auf einen an einer Trägerplatte 31 angeordneten Anschlagstößel 32 auf, wodurch die Verriegelung des Walzenarmes 17 gelöst wird. In der Fig. 1 ist genau dieser Moment dargestellt. Man erkennt, daß die Verriegelungsklinke 23 gerade durch den Anschlagsstößel 32 vom Verriegelungsbolzen 21 weggedrückt und damit der Walzenarm 17 entriegelt wird.

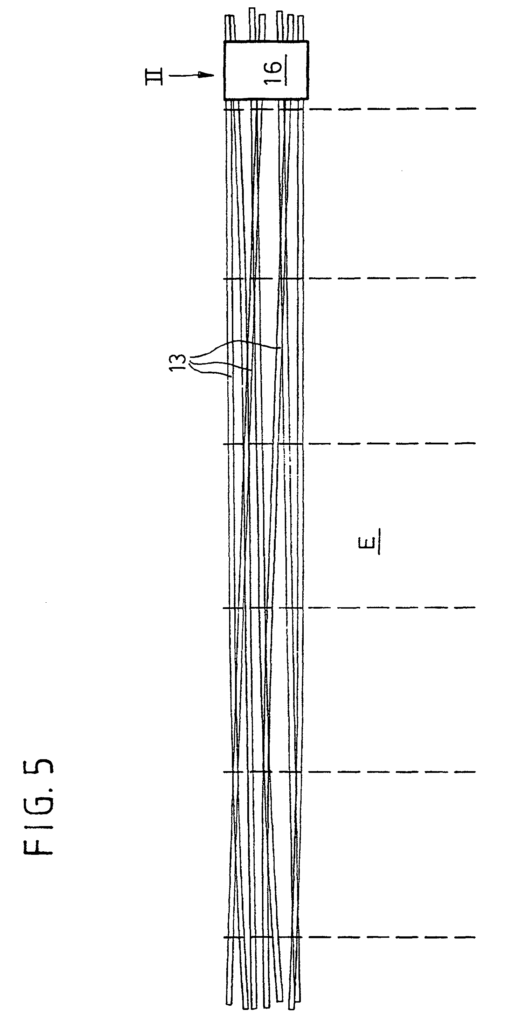

Falls nun der Wagen 19 in Gegenrichtung y' angetrieben wird, bewegt sich die Kurvenrolle 25 entlang der Hebekurve 27, wobei sich aufgrund der starren Verbindung von Walzenarm 17 und Betätigungsarm über das Drehgelenk 18 ein kontinuierliches Absenken der Walze 16 auf die Werkstücke 13 ergibt. In dem Moment in dem die Kurvenrolle 25 das Ende der Hebekurve 27 erreicht, ergibt sich die Stellung II der Walze 16. Diese Stellung II entspricht der Stellung der Walze 16 in der Skizze gemäß Fig. 5. Konkret bedeutet dies, daß die Walze 16 in ihrer ganzen Längserstreckung nunmehr auf dem Profilbündel aufsetzt und damit insbesondere auf die mehrlagig angeordneten Profile 13 eine sich aus der Gewichtskraft der Walze 16 ergebende Kraft ausübt.

An dieser Stelle sei bemerkt, daß es grundsätzlich auch möglich ist, die Walze 16 nicht nur mit ihrer Gewichtskraft auf das Profilbündel einwirken zu lassen. Es wäre auch denkbar, daß die Walze 16 mit einer steuerbaren Andruckvorrichtung versehen ist, so daß die Krafteinleitung z.B. in Abhängigkeit von der Form der Werkstücke veränderbar wäre.

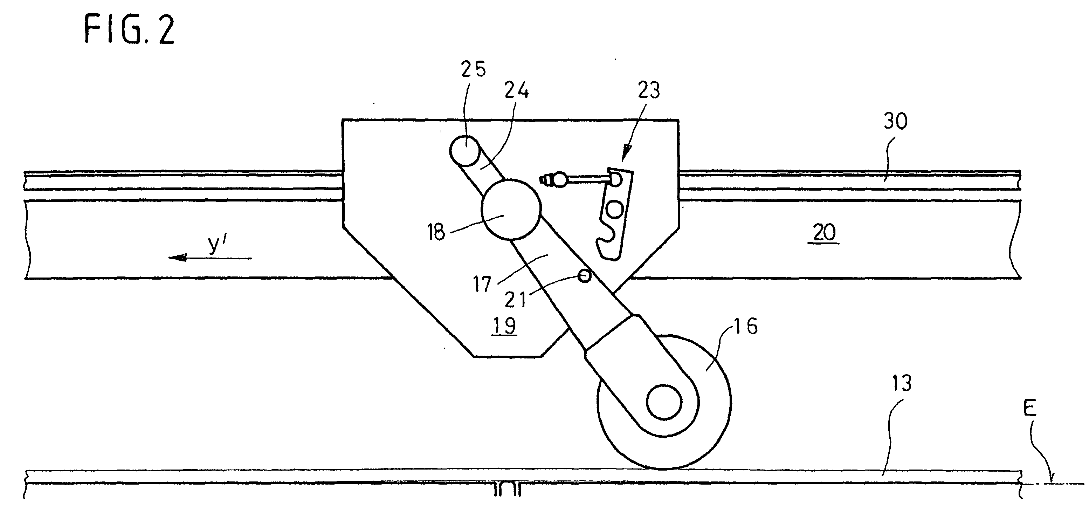

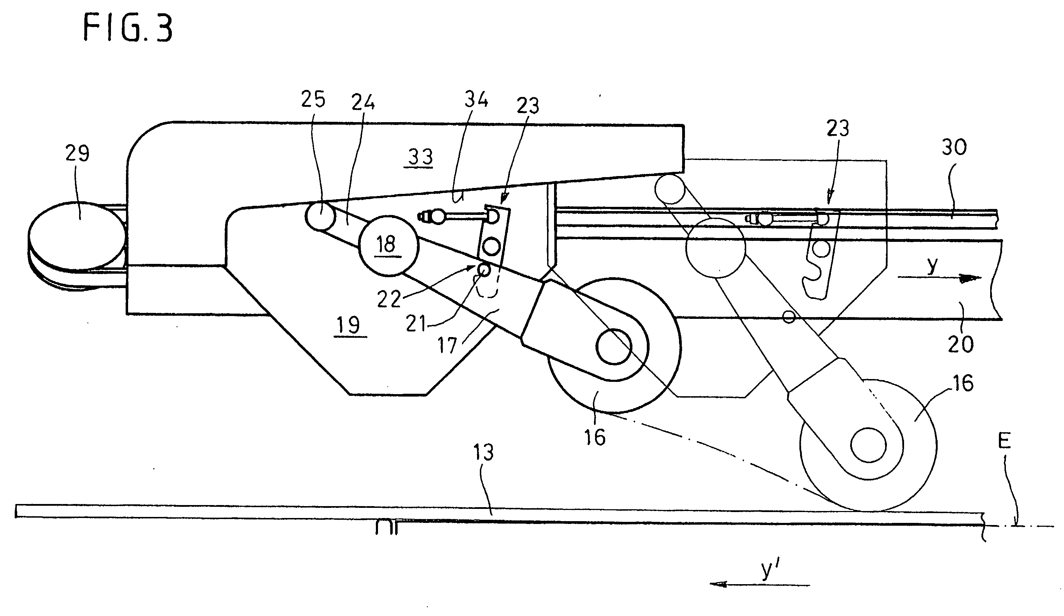

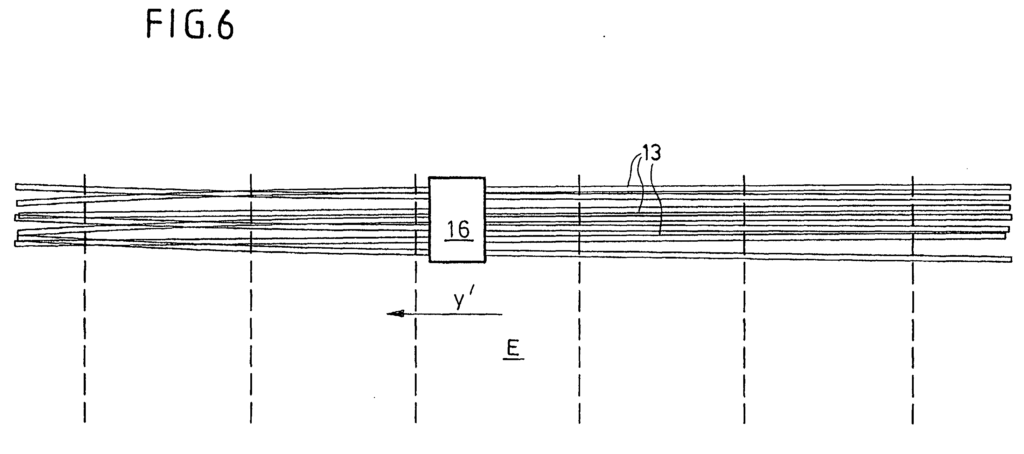

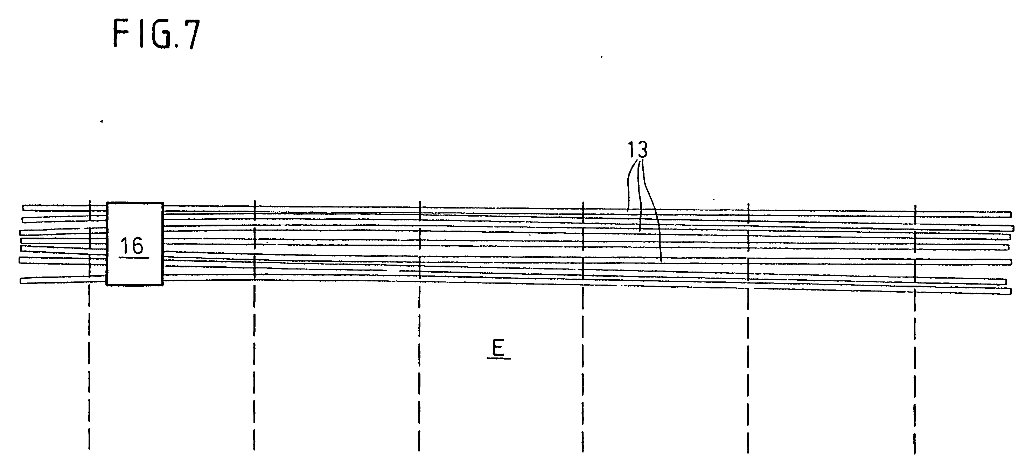

Die Krafteinwirkung führt nun bei weiterer Bewegung der Walze 16 in Richtung y' - der Walze 16 vorauseilend - zum einem gegenseitigen Voneinanderabrollen-/gleiten der Profile 13 und zu einer Parallelisierung letzterer. Diesen Vorgang erkennt man insbesondere in den Fig. 6 und 7. Während in der Fig. 2 die Arbeitsposition der Walze 16 dargestellt ist (Vergleich Fig. 6), zeigt die Fig. 3 die Endposition nach vollzogener Vereinzelung der Rohre 17, wie sie letztendlich in Fig. 7 schematisch zu erkennen ist.

Die Kurvenrolle 25 gerät kurz vor Erreichen der Endposition in den Einwirkungsbereich einer weiteren, an der Linearführung 20 befestigten Kufe 33, die eine Hebekurve 34 aufweist. Bei weiterer Bewegung in y'-Richtung wird - wie aus der Fig. 3 ersichtlich - durch die Einwirkung der Hebekurve 34 auf die Kurvenrolle 25 und den Betätigungsarm 24 der Walzenarm 17 um das Drehgelenk 18 herum kontinuierlich angehoben, bis daß der Verriegelungsbolzen 21 wieder in die Verriegelungsklinke 23 einrastet. Nunmehr ist die Endposition erreicht und der Wagen 19 kann mit der Walze 16 in y-Richtung wieder in die Startposition (s. Fig. 1) zurückfahren.

Grundsätzlich wäre es jedoch auch denkbar, daß die Walze 16 in beiden Bewegungsrichtungen y und y' eine Vereinzelung der Werkstücke 13 auf der Transportebene E durchführen kann.

## Patentansprüche

1. Vorrichtung zum Vereinzeln von stabförmigen Werkstücken (13), insbesondere lange und dünne Vollprofile und Hohlprofile, die bündelweise über- und untereinander auf einer Transportebene (E) lagern, wobei oberhalb der Transportebene (E) mindestens eine in die Werkstück-Anordnung Kräfte einleitende Einrichtung (16) angeordnet ist, mit der eine im wesentlichen parallele einlagige Anordnung der Werkstücke (13) herbeigeführt wird, **dadurch gekennzeichnet, daß** die Einrichtung (16) bei ständiger Anlage an die Werkstück-Anordnung im wesentlichen in Längserstreckung der Werkstücke (13) verfahrbar ist.

2. Vorrichtung nach Anspruch 1, **dadurch gekennzeichnet, daß** die Einrichtung (16) in Längsrichtung der Werkstücke (13) quer zur Transportrichtung (x) verfahrbar ist.

3. Vorrichtung nach Anspruch 1, **dadurch gekennzeichnet, daß** die Einrichtung (16) in Längsrichtung der Werkstücke (13) und in Transportrichtung (x) verfahrbar ist.

4. Vorrichtung nach einem der Ansprüche 1 bis 3, **dadurch gekennzeichnet, daß** die Einrichtung (16) als quer zur Längserstreckung der Werkstücke (13) angeordnetes längliches Bauteil ausgebildet ist, welches über die Werkstück-Anordnung gleitend bewegbar ist.

5. Vorrichtung nach einem der Ansprüche 1 bis 3, **dadurch gekennzeichnet, daß** die Einrichtung (16) als quer zur Längserstreckung der Werkstücke (13) angeordnete Walze (16) ausgebildet ist, welche über die Werkstück-Anordnung rollend bewegbar ist.

6. Vorrichtung nach Anspruch 5, **dadurch gekennzeichnet, daß** die Walze (16) über einen Walzenarm (17) und ein Drehgelenk (18) schwenkbar an einem Wagen (19) befestigt ist, der an einer quer zur Transportrichtung (x) verlaufenden Linearführung (20) bewegbar angeordnet ist.

7. Vorrichtung nach Anspruch 6, **dadurch gekennzeichnet, daß** der Walzenarm (17) einen über das Drehgelenk (18) hinaus geradlinig vorragenden Betätigungsarm (24) aufweist, der an seinem freien Endbereich eine Kurvenrolle (25) trägt.

8. Vorrichtung nach Anspruch 4, **dadurch gekennzeichnet, daß** die Linearführung (20) zwei Endbereiche mit jeweils einem eine Hebekurve (27, 33) aufweisenden Bauteil (26, 34) aufweist ist und daß durch die bei Annäherung an einen der Endbereiche in den Einwirkungsbereich einer der Hebekurven (27, 33) gelangte Kurvenrolle (25) die Walze (16) in eine von der Transportebene (E) beabstandete Ruheposition bewegbar ist.

9. Vorrichtung nach Anspruch 6 oder einem der folgenden, **dadurch gekennzeichnet, daß** der Wagen (19) mit einer Verriegelungsvorrichtung (23) für den Walzenarm (17) zur Fixierung der Walze (16) in der Ruheposition versehen ist.

10. Vorrichtung nach Anspruch 9, **dadurch gekennzeichnet, daß** die Verriegelungsvorrichtung (23) des Walzenarm (17) vor dem Absenken der Walze (16) automatisch lösbar ist.

11. Vorrichtung nach Anspruch 6 oder einem der folgenden, **dadurch gekennzeichnet, daß** der Wagen (19) mit Hilfe einer aus zwei an den Endbereichen der Linearführung (20) angeordneter Umlenkrollen (29) und einem umlaufenden am Wagen (19) beidseitig angeordneten Riemen (30) motorisch angetrieben wird.

12. Verfahren zur Vereinzelung von Werkstücken (13), insbesondere lange und dünne Voll- und Halbprofile, die bündelweise über- und untereinander auf einer Transportebene lagern, wobei oberhalb der Transportebene (2) mindestens eine in die Werkstück-Anordnung Kräfte einleitende Einrichtung (16) angeordnet ist, mit der eine im wesentlichen parallele einlagige Anordnung der Werkstücke herbeigeführt wird **dadurch gekennzeichnet, daß** in Längsrichtung der Werkstücke (13) eine in die Werkstück-Anordnung Kräfte einleitende Einrichtung (16) bewegt wird, welche in Anlage an die Werkstück-Anordnung eine einlagige, im wesentlichen parallele Ausrichtung der Werkstücke (13) hervorruft.

13. Verfahren nach Anspruch 12, **dadurch gekennzeichnet, daß** die Einrichtung quer zur Transportrichtung bewegt wird.

14. Verfahren nach Anspruch 12, **dadurch gekennzeichnet, daß** die Einrichtung in Transportrichtung bewegt wird.

15. Verfahren nach Anspruch 12, **dadurch gekennzeichnet, daß** in die Walze während der Bewegung über die Werkstück-Anordnung Erschütterungen eingeleitet werden, die als Bewegungsimpulse an die Werkstück-Anordnung übertragen werden.

## Claims

1. Device for singling bar-shaped workpieces (13), in particular long, thin solid and hollow sections which rest above and below one another in bundles on a plane of transport (E), wherein there is arranged, above said plane of transport (E), at least one apparatus (16) which introduces forces into the arrangement of workpieces and with the aid of which a substantially parallel, single-layer arrangement of said workpieces (13) is brought about, **characterised in that** the apparatus (16) is capable of travel, while constantly bearing against the arrangement of workpieces, substantially in the longitudinal extension of the said workpieces (13).

2. Device according to claim 1, **characterised in that** the apparatus (16) is capable of travel in the longitudinal direction of the workpieces (13) and transversely to the direction of transport (x).

3. Device according to claim 1, **characterised in that** the apparatus (16) is capable of travel in the longitudinal direction of the workpieces (13) and in the direction of transport (x).

4. Device according to one of claims 1 to 3, **characterised in that** the apparatus (16) is constructed as an elongated component which is arranged transversely to the longitudinal extension of the workpieces (13) and which can be moved over the arrangement of workpieces in a sliding manner.

5. Device according to one of claims 1 to 3, **characterised in that** the apparatus (16) is constructed as a cylinder (16) which is arranged transversely to the longitudinal extension of the workpieces (13) and which can be moved over the arrangement of workpieces in a rolling manner.

6. Device according to claim 5, **characterised in that** the cylinder (16) is pivotably fastened, via a cylinder arm (17) and a swivel joint (18), to a carriage (19) which is arranged in a movable manner on a linear guide (20) extending transversely to the direction of transport (x).

7. Device according to claim 6, **characterised in that** the cylinder arm (17) has an actuating arm (24) which protrudes beyond the swivel joint (18) in a rectilinear manner and carries a cam roller (25) at its free terminal region.

8. Device according to claim 4, **characterised in that** the linear guide (20) has two terminal regions each with a component (26, 34) having a lifting cam (27, 33), and that the cylinder (16) can be moved into a rest position at a distance from the plane of transport (E) by the cam roller (25) which has arrived, on approaching one of the terminal regions, within the range of action of one of the lifting cams (27, 33).

9. Device according to claim 6 or one of the subsequent claims, **characterised in that** the carriage (19) is provided with a locking device (23) for the cylinder arm (17) for the purpose of fixing the cylinder (16) in the rest position.

10. Device according to claim 9, **characterised in that** the locking device (23) of the cylinder arm (17) can be automatically undone before the lowering of the cylinder (16) .

11. Device according to claim 6 or one of the subsequent claims, **characterised in that** the carriage (19) is motor-driven with the aid of a device consisting of two deflecting pulleys (29) arranged at the terminal regions of the linear guide (20) and a revolving belt (30) arranged on both sides of the carriage (19).

12. Process for singling workpieces (13), in particular long, thin solid and hollow sections which rest above and below one another in bundles on a plane of transport, wherein there is arranged, above said plane of transport (E), at least one apparatus (16) which introduces forces into the arrangement of workpieces and with the aid of which a substantially parallel, single-layer arrangement of said workpieces is brought about, **characterised in that** an apparatus (16) which introduces forces into the arrangement of workpieces and which, bearing against the said arrangement of workpieces, gives rise to a single-layer, substantially parallel orientation of the workpieces (13), is moved in the longitudinal direction of said workpieces (13) .

13. Process according to claim 12, **characterised in that** the apparatus is moved transversely to the direction of transport.

14. Process according to claim 12, **characterised in that** the apparatus is moved in the direction of transport.

15. Process according to claim 12, **characterised in that** vibrations, which are transmitted to the arrangement of workpieces as stimuli to movement, are introduced into the cylinder during the movement over said arrangement of workpieces.

## Revendications

1. Dispositif pour individualiser des pièces d'oeuvre (13) en forme de barre, en particulier des profilés pleins et des profilés creux, longs et minces, qui sont stockés en faisceaux ou bottes, les uns au-dessus et au-dessous des autres, sur un plan de transport (E), sachant que, au-dessus du plan de transport (E), est disposé au moins un dispositif (16), induisant des efforts dans l'agencement de pièces d'oeuvres, dispositif à l'aide duquel un agencement à une couche, pratiquement parallèle, des pièces d'oeuvre (13), est provoqué, **caractérisé en ce que** le dispositif (16) est déplaçable, sensiblement dans l'étendue longitudinale des pièces d'oeuvre (13), en appui permanent sur l'agencement de pièces d'oeuvre.

2. Dispositif selon la revendication 1, **caractérisé en ce que** le dispositif (16) est déplaçable dans la direction longitudinale des pièces d'oeuvre (13), transversalement par rapport à la direction de transport (x).

3. Dispositif selon la revendication 1, **caractérisé en ce que** le dispositif (16) est déplaçable dans la direction longitudinale des pièces d'oeuvre (13) et dans la direction de transport (x).

4. Dispositif selon l'une des revendications 1 à 3, **caractérisé en ce que** le dispositif (16) est réalisé sous la forme de composant allongé, disposé transversalement par rapport à l'étendue longitudinale des pièces d'oeuvre (13) et déplaçable en glissant sur l'agencement de pièces d'oeuvre.

5. Dispositif selon l'une des revendications 1 à 3, **caractérisé en ce que** le dispositif (16) est réalisé sous la forme de cylindre (16), disposé transversalement par rapport à la direction longitudinale des pièces d'oeuvre (13), cylindre qui est déplaçable en roulant sur l'agencement de pièces d'oeuvre.

6. Dispositif selon la revendication 5, **caractérisé en ce que** le cylindre (16) est fixé sur un chariot (19), de façon à pouvoir pivoter, par l'intermédiaire d'un bras à cylindre (17) et d'une articulation tournante (18), le chariot étant disposé de façon à pouvoir se déplacer sur un guidage linéaire (20), s'étendant transversalement par rapport à la direction de transport (x).

7. Dispositif selon la revendication 6, **caractérisé en ce que** le bras à cylindre (17) présente un bras d'actionnement (24) en saillie, de façon rectiligne, sur l'articulation tournante (18) et portant un galet à came (25), sur sa zone d'extrémité libre.

8. Dispositif selon la revendication 4, **caractérisé en ce que** le guidage linéaire (20) présente deux zones d'extrémité ayant chacune un composant (26, 34) présentant une came de levage (27, 33), et **en ce qu'**au moins, au moyen du galet à came (25), arrivant dans la zone d'action d'une des cames de levée (27, 33), lors de l'approche d'une des zones d'extrémité, le cylindre (16) est déplaçable à une position de repos distante du plan de transport (E) .

9. Dispositif selon la revendication 6, ou l'une des revendications suivantes, **caractérisé en ce que** le chariot (19) est muni d'un dispositif de verrouillage (23), pour le bras à cylindre (17), afin de fixer le cylindre (16) à la position de repose.

10. Dispositif selon la revendication 9, **caractérisé en ce que** le dispositif de verrouillage (23) du bras à cylindre (17) est désolidarisable automatiquement, avant l'abaissement du cylindre (16).

11. Dispositif selon la revendication 6, ou l'une des revendications suivantes, **caractérisé en ce que** le chariot (19) est entraîné par moteur, à l'aide d'une transmission formée de deux poulies de renvoi (29), disposées sur les zones d'extrémité du guidage linéaire (20), et d'une courroie (30) en circulation, disposée de part et d'autre sur le chariot (19).

12. Procédé d'individualisation de pièces d'oeuvre (13), en particulier de profilés pleins et creux, longs et minces, qui sont stockés en faisceaux ou bottes, les uns au-dessus et au-dessous des autres, sur un plan de transport, sachant que, au dessus du plan de transport (E), est disposé au moins un dispositif (16), induisant des efforts dans l'agencement de pièces d'oeuvres, dispositif à l'aide duquel un agencement à une couche, pratiquement parallèle, des pièces d'oeuvre, est provoqué, **caractérisé en ce que**, dans la direction longitudinale des pièces d'oeuvre (13), est déplacé un dispositif (16), induisant des efforts dans l'agencement de pièces d'oeuvre, dispositif provoquant une orientation sensiblement parallèle des pièces d'oeuvre (13), sur une couche, en appui sur l'agencement de pièces d'oeuvre.

13. Procédé selon la revendication 12, **caractérisé en ce que** le dispositif est déplacé transversalement par rapport à la direction de transport.

14. Procédé selon la revendication 12, **caractérisé en ce que** le dispositif est déplacé dans la direction de transport.

15. Procédé selon la revendication 12, **caractérisé en ce que**, dans le cylindre, pendant le déplacement, des secousses sont induites sur l'agencement de pièces d'oeuvre et transmises à l'agencement de pièces d'oeuvres, sous forme d'impulsions de mouvement.
